# EUROPEAN PATENT APPLICATION

(11) **EP 4 721 599 A1**
(43) Date of publication of application: **08.04.2026**
(21) Application number: 24814232.5
(22) Date of filing: 20.05.2024
(51) Int. Cl.: A24F 40/46, A24F 40/48, A24F 40/10

(54) **ATOMIZATION CORE, ATOMIZER AND ELECTRONIC ATOMIZATION DEVICE**

(30) Priority: 01.06.2023 CN 202310645706
(71) Applicant: Smoore International Holdings Limited, Grand Cayman, KY1-1111 (KY)
(72) Inventor: WANG, Jianguo, Shenzhen, Guangdong 518102 (CN); XIAO, Lingrong, Shenzhen, Guangdong 518102 (CN); NAN, Bo, Shenzhen, Guangdong 518102 (CN); XIAO, Congwen, Shenzhen, Guangdong 518102 (CN); WANG, Hongjun, Shenzhen, Guangdong 518102 (CN)
(74) Representative: Winter, Brandl - Partnerschaft mbB
(86) International application number: PCT/CN2024/094249
(87) International publication number: WO 2024/245033

(57) **Abstract**

This application relates to the field of electronic atomization technologies, and in particular, to an atomization core, an atomizer, and an electronic atomization device. The atomization core provided in this application includes a porous substrate and a heating element. The porous substrate is a porous glass-ceramic substrate, and composition thereof by atomic percentage includes: 60-65 at% of O and 20-35 at% of Si. In this application, the ceramic substrate obtained by adjusting the composition and content of the porous glass-ceramic substrate can effectively enhance strength of the porous substrate, so that the substrate exhibits better stability, and a service life thereof is effectively prolonged.

## Description

### CROSS-REFERENCE TO RELATED APPLICATIONS

This application claims priority to Chinese Patent Application No. 202310645706.2, filed with the China National Intellectual Property Administration on June 1, 2023 and entitled "ATOMIZATION CORE, ATOMIZER, AND ELECTRONIC ATOMIZATION DEVICE", which is incorporated herein by reference in its entirety.

### TECHNICAL FIELD

This application relates to the field of electronic atomization technologies, and in particular, to an atomization core, an atomizer, and an electronic atomization device.

### BACKGROUND

As a good substitute for a conventional cigarette, an e-cigarette has an advantage of reducing harmful substances such as tar and CO in smoke. Currently, a main atomization manner of a commercially available e-cigarette is resistance heating atomization, and e-liquid is atomized through heating of an atomization core. An existing atomization core usually includes a porous substrate and a heating element. The porous substrate is usually made of a material with a porous structure, such as a cotton core and a porous ceramic, to achieve a function of guiding an atomization medium toward the heating element. However, in the related art, a ceramic material is usually manufactured by using, for example, diatomite. A conventional ceramic material such as the diatomite has complex composition, which results in relatively poor strength of a porous substrate of the e-cigarette. As a result, a thermal impact resistance thereof is relatively poor, and local detachment and fracture are easily caused, affecting a taste and a service life thereof.

### SUMMARY

An objective of this application is to provide an atomization core, an atomizer, and an electronic atomization device, so as to overcome a defect in the related art that a porous substrate of an atomization core has relatively poor strength and affects a taste and a service life of the atomization core.

To achieve the foregoing objective, this application adopts the following technical solutions.

This application provides an atomization core. The atomization core includes a porous substrate and a heating element.

The porous substrate is a porous glass-ceramic substrate, and composition thereof by atomic percentage includes: 60-65 at% of O and 20-35 at% of Si.

Optionally, the composition of the porous glass-ceramic substrate by atomic percentage further includes at least one of 3-7.5 at% of Na, 0.09-2 at% of Mg, 0.23-3 at% of Al, or 1-3.5 at% of Ca.

Optionally, a porosity of the porous glass-ceramic substrate ranges from 50% to 90%.

Optionally, the porous glass-ceramic substrate includes a crystalline phase and an amorphous phase, and has a crystallinity ranging from 50% to 99%.

Optionally, the crystalline phase includes a quartz phase.

Optionally, an average pore size of the porous glass-ceramic substrate ranges from 15 µm to 45 µm.

Optionally, a compressive strength of the porous glass-ceramic substrate is greater than 1.5 MPa.

Optionally, the compressive strength of the porous glass-ceramic substrate ranges from 6 MPa to 18 MPa.

Optionally, the heating element is a metal heating film.

Optionally, the metal heating film is selected from at least one of stainless steel or a nickelcontaining alloy.

This application provides an atomizer. The atomizer includes the foregoing atomization core.

This application further provides an atomization device. The electronic atomization device includes the foregoing atomization core.

Beneficial effects of this application are as follows.

This application provides the atomization core. The atomization core includes a porous substrate and a heating element. The porous substrate is a porous glass-ceramic substrate, and composition thereof by atomic percentage includes: 60-65 at% of O and 20-35 at% of Si. In this application, the ceramic substrate obtained by using the porous glass-ceramic substrate as a porous substrate of an e-cigarette and by adjusting composition and content of the porous glass-ceramic substrate can effectively improve strength of the porous substrate and an atomization core, so that the substrate and the atomization core exhibit better stability, and the service life thereof is effectively prolonged. Consistency of the taste is not affected, and the aroma reducibility is improved.

### BRIEF DESCRIPTION OF THE DRAWINGS

To describe technical solutions in specific implementations of this application or in the related art more clearly, the accompanying drawings required for describing the specific implementations or the related art are briefly described below. Apparently, the accompanying drawings in the following description show some implementations of this application, and a person of ordinary skill in the art may still derive other drawings from these accompanying drawings without creative efforts.

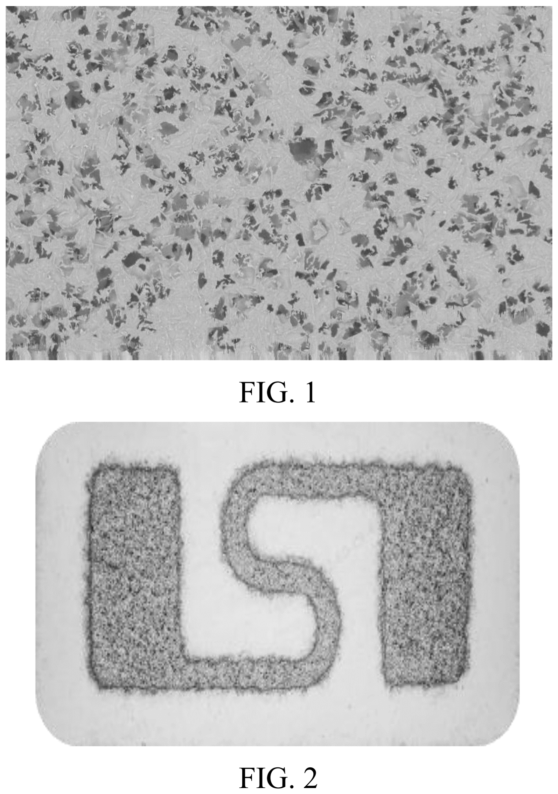

FIG. 1 is a scanning electron micrography (SEM) diagram of a porous substrate according to Embodiment 1 of this application.
FIG. 2 is a physical diagram of a heating element of an atomization core according to Embodiment 1 of this application.
FIG. 3 is a diagram of a result of a taste test using an atomization medium a according to an embodiment of this application.
FIG. 4 is a diagram of a result of a taste test using an atomization medium b according to an embodiment of this application.
FIG. 5 is a schematic diagram of an atomizer according to this application.
FIG. 6 is a schematic diagram of an electronic atomization device according to this application.

Reference numerals: 1. Atomizer; 2. Battery assembly.

### DETAILED DESCRIPTION

The following embodiments are provided to better understand this application and are not intended limit an optimum implementation, and do not constitute a limitation to the content and the scope of protection of this application. Any product identical or similar to this application obtained by anyone under the inspiration of this application or by combining this application with the features of other prior art shall fall within the scope of protection of this application.

If no specific experimental steps or conditions are specified in the embodiments, the experiments can be carried out according to the conventional experimental steps or conditions described in the literature in the art. Reagents or instruments used without indicating the manufacturer are all conventional reagent products that can be purchased commercially.

In the related art, a ceramic material is usually manufactured by using, for example, diatomite. A conventional ceramic material such as diatomite has complex composition, which results in relatively poor strength of a porous substrate of the e-cigarette. As a result, a thermal impact resistance thereof is relatively poor, and local detachment and fracture are easily caused, affecting a service life thereof. In addition, a raw material of the diatomite usually has complex composition and is not easy to be controlled. In application of an electronic atomization device, inconsistent tastes and aroma reducibility are easily caused.

Therefore, this application provides an atomization core. The atomization core includes a porous substrate and a heating element. The porous substrate is a porous glass-ceramic substrate, and composition thereof by atomic percentage includes: 60-65 at% of O and 20-35 at% of Si. The inventor finds that the ceramic substrate obtained by using the porous glass-ceramic substrate as a porous substrate of an e-cigarette and by adjusting composition and content of the porous glass-ceramic substrate can effectively improve strength of the porous substrate and an atomization core containing the ceramic substrate, so that the substrate and the atomization core exhibit better stability, and the service life thereof is effectively prolonged. Consistency of the taste is not affected, and the aroma reducibility is improved.

Besides, in a case of a high porosity, the obtained porous substrate can still have good overall compressive strength, and is applied to the atomization core, thereby improving the service life. A porous structure in the substrate is maintained, so as to reduce generation of soot and improve the taste.

In addition, the atomization core of this application has high strength, thereby avoiding problems such as fracture and failure caused by insufficient strength during use. Under thermal impact during the atomization process, the porous substrate also has higher stability, and it is not easy to locally cause cracks and damage due to different composition. Therefore, the atomization core of this application has a longer service life.

In an optional implementation, the composition thereof by atomic percentage further includes at least one of 3-7.5 at% of Na, 0.09-2 at% of Mg, 0.23-3 at% of Al, or 1-3.5 at% of Ca.

In an optional implementation, a porosity of the porous glass-ceramic substrate ranges from 50% to 90%. For example, optionally, the porosity of the porous glass-ceramic substrate is 50%, 51%, 52%, 53%, 54%, 56%, 57%, 58%, 59%, 60%, 61%, 62%, 63%, 64%, 65%, 66%, 67%, 68%, 69%, 70%, 71%, 72%, 73%, 74%, 75%, 77%, 79%, 80%, 82%, 83%, 84%, 85%, 86%, 88%, 89%, or 90%.

In an optional implementation, the porous glass-ceramic substrate includes a crystalline phase and an amorphous phase, and has a crystallinity ranging from 50% to 99%. For example, optionally, the crystallinity of the porous glass-ceramic substrate is 50%, 51%, 52%, 53%, 54%, 56%, 57%, 58%, 59%, 60%, 61%, 62%, 63%, 64%, 65%, 66%, 67%, 68%, 69%, 70%, 71%, 72%, 73%, 74%, 75%, 77%, 79%, 80%, 82%, 83%, 84%, 85%, 86%, 88%, 89%, 90%, 91%, 92%, 93%, 94%, 95%, 96%, 97%, 98%, or 99%. Optionally, the glass bubbles of the raw material may also have a certain degree of crystallinity. In other words, the glass bubbles of the raw material may be glass or a glass-ceramic. Further, the crystalline phase includes a quartz phase. A melting point of the quartz phase is approximately 1700 °C, and has a higher melting point. The temperature is much higher than a softening point of the glass. Therefore, a basic form of the substrate can be further kept from being damaged during a forming process, and problems such as collapsing can be avoided, thereby further maintaining the porous structure in the substrate and improving the strength of the substrate. Under a composition distribution ratio of this application, a crystalline phase (for example, the quartz phase) having a high melting point easily forms. Because a temperature of the crystalline phase having high melting point is much higher than a softening point of the glass, the crystalline phase partially forms a framework structure, keeps a macroscale form of the substrate from changing significantly during forming through sintering, avoids occurrence of problems such as collapsing, and maintains the porous structure in the substrate.

In an optional implementation, an average pore size of the porous glass-ceramic substrate ranges from 15 µm to 45 µm. For example, optionally, the average pore size of the porous glassceramic substrate is 15 µm, 16 µm, 17 µm, 18 µm, 19 µm, 20 µm, 21 µm, 22 µm, 23 µm, 24 µm, 25 µm, 26 µm, 27 µm, 28 µm, 29 µm, 30 µm, 31 µm, 32 µm, 33 µm, 34 µm, 35 µm, 36 µm, 37 µm, 38 µm, 39 µm, 40 µm, 41 µm, 42 µm, 43 µm, 44 µm, or 45 µm. The pore size has a medium range, which has an effect of liquid guiding and liquid locking. It should be noted that the pore size of the porous glass-ceramic substrate may also be controlled and adjusted by selecting the glass bubbles of the raw material, and the glass bubbles of the raw material having a required particle size may be obtained through suitable screening. The pore structure of the porous glass-ceramic substrate is controllable through suitable glass bubbles of a raw material and a manufacturing process.

In an optional implementation, a compressive strength of the porous glass-ceramic substrate is greater than 1.5 MPa. Further, optionally, the compressive strength of the porous glass-ceramic substrate ranges from 6 MPa to 18 MPa. For example, optionally, the compressive strength of the porous glass-ceramic substrate is 6 MPa, 6.1 MPa, 6.3 MPa, 6.5 MPa, 6.6 MPa, 6.7 MPa, 6.8 MPa, 6.9 MPa, 7 MPa, 7.1 MPa, 7.3 MPa, 7.4 MPa, 7.5 MPa, 7.6 MPa, 7.8 MPa, 7.9 MPa, 8 MPa, 8.4 MPa, 8.8 MPa, 9 MPa, 9.2 MPa, 9.7 MPa, 10 MPa, 10.5 MPa, 10.9 MPa, 11 MPa, 11.6 MPa, 11.9 MPa, 12 MPa, 12.5 MPa, 12.8 MPa, 13 MPa, 13.5 MPa, 14 MPa, 14.5 MPa, 15 MPa, 15.5 MPa, 16 MPa, 16.5 MPa, 17 MPa, 17.5 MPa, or 18 MPa.

A specific form and material of the heating element are not specifically limited in this application. For example, the heating element may be selected from a metal heating film. Further, the metal heating film is selected from at least one of stainless steel or a nickelcontaining alloy.

In some optional implementations, the heating element is arranged on at least one surface of the porous glass-ceramic substrate, and the manufacturing method includes at least one of printing, welding, evaporation, or deposition. For example, optionally, a heating element paste is printed on a substrate, and is formed through sintering at a preset temperature. Optionally, the heating element or a heating mesh is soldered to the substrate. Optionally, the heating element is evaporated/deposited on the substrate through physical vapor deposition (PVD) or chemical vapor deposition (CVD).

The manufacturing method of the atomization core in this application may be a conventional method in the art, or a sintering process of the glass bubbles is used. The glass bubbles are hollow glass "microspheres" and may be obtained commercially. In a manufacturing process of this application, the glass bubbles of the raw material are sintered to form glass-ceramic bubbles with an opening of a certain degree of crystallinity. Optionally, that the sintering process of the glass bubbles is used includes the following steps.
1) Mix the glass bubbles of the raw material with a binder, a slipping agent, and water, and perform pressing and forming to obtain a green body.
2) Perform a first sintering, a second sintering, and a third sintering on the green body in step 1), to obtain the porous glass-ceramic substrate.
3) Print a heating element paste on the porous glass-ceramic substrate in step 2) and form through sintering.

In some optional implementations, in step (1), the binder may be an organic binder. Specifically, the binder is selected from at least one of methylcellulose, hydroxyethyl cellulose, or hydroxypropyl methylcellulose. The slipping agent may be a slipping agent of an aliphatic hydrocarbon, for example, a paraffin, or a metal stearate. Specifically, the slipping agent is sodium stearate.

In some optional implementations, a pressure for pressing and forming in step 1) ranges from 1 bar to 40 bar. Most of the glass bubbles do not fragment during the pressing and forming process, and a complete spherical shape of the single glass bubble is maintained. Therefore, the pressure for pressing and forming may be properly adjusted based on a compressive strength of the selected glass bubbles.

In some optional implementations, in step 2), a first temperature of the first sintering is at least 200°C, for example, 300°C to 400°C, and/or a first residence time is at least 1 minute, for example, 1 hour to 10 hours. During the sintering process at the temperature, a substance such as a solvent and a binder is removed from the green body.

In some optional implementations, a second temperature of the second sintering is greater than 400°C and less than a softening point of glass of the glass bubbles. for example, 500°C, 600°C, or 700°C, and a second residence time thereof is at least 1 minute, for example, 1 hour to 10 hours. The purpose of the second temperature is greater than 400 °C and less than the softening point of the glass of the glass bubbles is to keep an original form of the green body unchanged. In addition, because the temperature has already exceeded 400°C, glass composition in the glass bubbles starts to change. A disordered glass phase partially crystallizes to a crystalline phase within the temperature range, and the glass bubbles convert into the glass-ceramic bubbles or a proportion of the crystalline phase in the glass bubbles starts to increase. In addition, due to the conversion, some of the glass bubbles begin to crack and have at least one opening. Therefore, the sintering time within the temperature range may be properly adjusted to regulate the crystallinity of the porous glass-ceramic. It may be understood that the glass bubbles of the raw material may also include a certain proportion of the crystal phase, which may shorten the sintering time in this process.

In some optional implementations, a third temperature of the third sintering is greater than the softening point of the glass. Specifically, a temperature of the softening point of the glass is less than 900°C. A third residence time may be at least 1 minute, for example, 1 hour to 10 hours. At this temperature, the glass composition has flowability. Therefore, adjacent glass-ceramic bubbles are directly adhered to each other, and the glass-ceramic bubbles are adhered to form a porous glass-ceramic substrate of an integral structure. In addition, because the glass-ceramic bubbles still have crystalline phase composition, the crystalline phase composition, as a framework, causes the form of the glass-ceramic bubbles to not collapse, and still maintains a basic complete form. In addition, the glass-ceramic bubbles are further cracked to form a large quantity of openings. The openings are in communication with each other to form pores. The pores extend through the porous glass-ceramic substrate and reach a surface of the porous glass-ceramic substrate.

The third temperature is greater than the softening point of the glass of the glass bubbles. The glass-ceramic bubbles are heated at least to a softening temperature of an amorphous glass, so that most of the glass-ceramic bubbles open due to expansion of air in the bubbles. In addition, the heating causes the adjacent glass-ceramic bubbles to sinter together and form a bond. Overall, the bonded open glass-ceramic bubbles form the pores of the porous glass-ceramic substrate. The glass-ceramic bubbles are applied to an atomizer and an electronic atomization device, so as to effectively improve atomization efficiency and a liquid guiding effect.

In some optional implementations, a mass ratio of the glass bubbles to the binder, the slipping agent, and the water is (70-110) : (25-35) : (2.5-3) : (40-50).

In some optional implementations, in step 3), the raw material of the heating element may be at least one of the electronic paste (metal paste), the heating wire, or the heating mesh. The electronic paste may be directly applied to the surface of the porous glass-ceramic substrate through screen printing based on a preset contour, and then is formed through sintering at the preset temperature. The sintering temperature may be adaptively adjusted based on types of a bonding phase and metal composition in the electronic paste. Generally, the sintering temperature ranges from 400°C to 800°C.

In some optional implementations, the glass composition of the glass bubbles may be sodalime silicate glass and/or borosilicate glass.

In some optional embodiments, in step 1), the pore-forming agent is further added. Optionally, the pore-forming agent is selected from at least one of starch, polymethyl methacrylate (PMMA), polystyrene (PS), or graphite. Optionally, a particle size of the pore-forming agent may range from 1 µm to 150 µm. It may be understood that the addition of the pore-forming agent may further increase the porosity of the porous glass-ceramic substrate in a case that the strength of the glass bubbles of the raw material is ensured.

In some optional implementations, in step 1), a second inorganic material is further included. The second inorganic material may be at least one of clay, talc, silica, or alumina. Melting points or softening points of the foregoing materials are greater than the softening point of the glass in the glass bubbles.

In some optional implementations, a mass ratio of the glass bubbles to the binder, the slipping agent, the water, the pore-forming agent, and the second inorganic material is (70-110): (25-35) : (2.5-3) : (40-50) : (0-40) : (0-4).

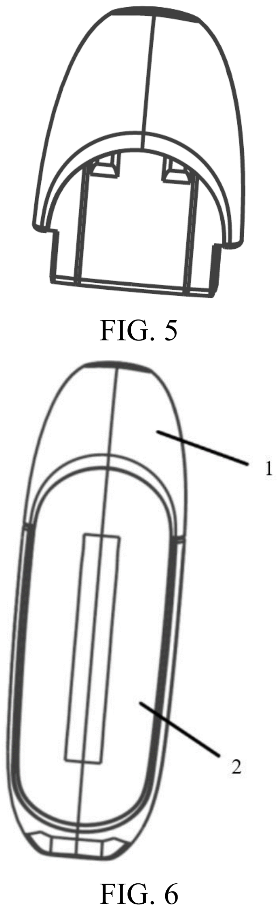

As shown in FIG. 5, this application further provides an atomizer. The atomizer includes the foregoing atomization core. The atomizer includes a shell. A liquid storage tank and an atomization cavity are formed in the shell. The liquid storage tank is configured to store a liquid atomization medium, and the atomization cavity is configured to accommodate the foregoing atomization core. The atomization core may atomize the liquid atomization medium.

As shown in FIG. 6, this application further provides an electronic atomization device. The electronic atomization device includes the foregoing atomizer 1, and further includes a battery assembly 2. The battery assembly and the atomizer may be of an integrated structure or a detachable structure. The battery assembly is configured to supply power to the atomizer based on a preset mode, so that the atomizer atomizes the liquid atomization medium based on the preset mode.

This application is further described in detail below with reference to specific embodiments. These embodiments cannot be understood as limiting the protection scope of this application.

### Embodiment 1

This embodiment provides an atomization core. The atomization core includes a porous substrate and a heating element. The porous substrate is a porous glass-ceramic substrate, and composition thereof by atomic percentage includes: 62.42 at% of O, 31.88 at% of Si, 3.05 at% of Na, 0.12 at% of Mg, 0.24 at% of Al, and 2.29 at% of Ca.

This embodiment provides an atomization core. A manufacturing method thereof includes the following steps.
1) Mix 100g of glass bubbles with 25 g of hydroxyethyl cellulose, 2.5g of sodium stearate, 2.06g of clay, and 45.21g of water, and perform pressing and forming to obtain a green body, where a forming pressure is 18 bar, particle size parameters of the glass bubbles are as follows: D10 is 17.16 µm, D50 is 37.74 µm, and D90 is 74.35 µm; and an intra-spherical porosity of a single glass bubble is 81.6%.
2) Form the green body in step 1) through sintering, to obtain a porous glass-ceramic substrate, where a first sintering temperature is 290°C, a first sintering time is 3.8h, a second sintering temperature is 450°C, a second sintering time is 4h, a third sintering temperature is 1050°C, and a third sintering time is 4h.
3) Print stainless steel paste on the porous glass-ceramic substrate in step 2) and form through sintering, a sintering temperature being 800°C and a sintering time being 3.5h, to obtain the atomization core.

### Embodiment 2

This embodiment provides an atomization core. The atomization core includes a porous substrate and a heating element. The porous substrate is a porous glass-ceramic substrate, and composition thereof by atomic percentage includes: 60.82 at% of O, 32.73 at% of Si, 3.76 at% of Na, 0.13 at% of Mg, 0.33 at% of Al, and 2.23 at% of Ca.

The manufacturing method thereof includes the following steps.
1) Mix 90g of glass bubbles with 26g of hydroxyethyl cellulose, 2.6g of sodium stearate, 4g of clay, 50g of water, and 10g polymethyl methacrylate (PMMA), and perform pressing and forming to obtain a green body, where a forming pressure is 22 bar, particle size parameters of the glass bubbles are as follows: D10 is 17.16 µm, D50 is 37.74 µm, and D90 is 74.35 µm; and an intra-spherical porosity of a single glass bubble is 81.6%.
2) Form the green body in step 1) through sintering, to obtain a porous glass-ceramic substrate, where a first sintering temperature is 260°C, a first sintering time is 1h, a second sintering temperature is 800°C, a second sintering time is 3h, a third sintering temperature is 1100°C, and a third sintering time is 6h.
3) Print stainless steel paste on the porous glass-ceramic substrate in step 2) and form through sintering, a sintering temperature being 800°C and a sintering time being 1.5h, to obtain the atomization core.

### Embodiment 3

This embodiment provides an atomization core. The atomization core includes a porous substrate and a heating element. The porous substrate is a porous glass-ceramic substrate, and composition thereof by atomic percentage includes: 64.71 at% of O, 29.83 at% of Si, 1.56 at% of Na, 0.23 at% of Mg, 0.53 at% of Al, and 3.24 at% of Ca.

The manufacturing method thereof includes the following steps.
1) Mix 80g of glass bubbles with 26g of hydroxyethyl cellulose, 2.6g of sodium stearate, 4g of clay, 50g of water, and 25g polymethyl methacrylate (PMMA), and perform pressing and forming to obtain a green body, where a forming pressure is 25 bar, particle size parameters of the glass bubbles are as follows: D10 is 17.16 µm, D50 is 37.74 µm, and D90 is 74.35 µm; and an intra-spherical porosity of a single glass bubble is 81.6%.
2) Form the green body in step 1) through sintering, to obtain a porous glass-ceramic substrate, where a first sintering temperature is 260°C, a first sintering time is 1h, a second sintering temperature is 800°C, a second sintering time is 3h, a third sintering temperature is 1080°C, and a third sintering time is 6h.
3) Print stainless steel paste on the porous glass-ceramic substrate in step 2) and form through sintering, a sintering temperature being 800°C and a sintering time being 1.5h, to obtain the atomization core.

### Comparative example 1

This comparative example provides an atomization core, and a difference between the atomization core and embodiment 3 lies in that the porous substrate is made of a material of a cotton core.

### Comparative example 2

This comparative example provides an atomization core, and a difference between the atomization core and embodiment 1 lies in that the porous substrate is made of a porous ceramic substrate. The main composition of the porous ceramic substrate includes diatomite.

### Test example 1

In this embodiment of this application, a representation test is performed on parameters such as a porosity, a compressive strength, a pore size, and the like of the porous ceramic substrate of the atomization core.

A test method of the porosity and the pore size is a mercury intrusion method (a test device is a mercury porosimeter). A test method for the compressive strength relates to 5 parallel samples that are taken for the same embodiment and separately tested. For a test method, reference is made to GB/T4740-1999 "Test Method for Compressive Strength of Ceramic Material".

In this embodiment. a preset quantity (the preset quantity of inhalations in this application is 500) of inhalation of the atomization core. In this process, whether a failure situation exists is tested, and statistics collection is performed to record a lifespan situation thereof. The failure situation mainly includes: 1. A significant abnormal change of a resistance of the atomization core (for example, a significant increase in the resistance caused by splitting or shedding of the heating element). 2. A fog output volume is less than half of an initial atomization amount. The atomization cores in Embodiments 1-3 all meet a preset service life of 500 puffs, and no failure situation occurs.

In addition, a test is performed on a smoke amount thereof, which separately includes a test of a smoke amount of a die with a test power of 7.5W; and a test of a smoke amount of an assembled atomizer with a test power of 6.5W. The foregoing test is performed by using a fruit (watermelon) flavored e-liquid (the atomization medium a).

Statistics on the foregoing test results are shown in Table 1.

**Table 1 Test data of Embodiments 1-3**

| Embodiment | Average pore size (µm) | Smoke amount (die, 7.5W, and unit: mg) | Smoke amount (atomizer, 6.5W, and unit: mg) | Porosity (%) | Compressive strength (Mpa) |
|---|---|---|---|---|---|
| Embodiment 1 | 20.25 | 12.45 | 7.90 | 61.92 | 7.9 |
| Embodiment 2 | 20.25 | 12.50 | 9.5 | 73.70 | 6.9 |
| Embodiment 3 | 21.77 | 11.79 | 8.3 | 77.06 | 6.6 |

### Test example 2

The atomization cores of the embodiments and the comparative examples are assembled as atomizers, which separately perform inhalation on 5 test persons and give scores based on various preset dimensions. Statistical averaging is performed on the scores, to obtain an inhalation taste score of the sample.

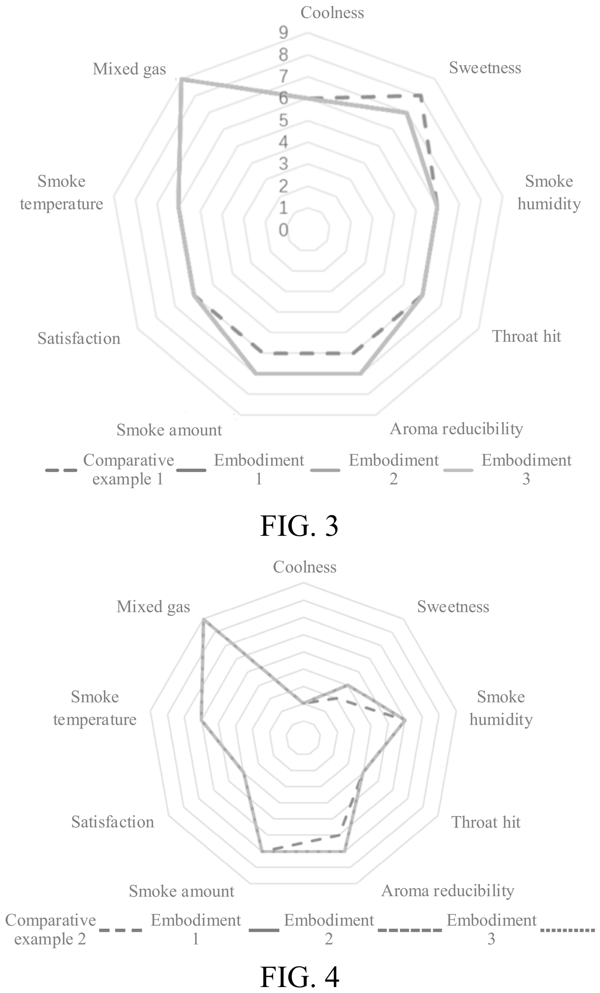

For a taste test performed by using the atomization medium a (fruit flavor), the atomization power is 6.5W. In the comparative example 1, a cotton core is used as an atomization core of a porous substrate. As shown in FIG. 3, the results of embodiment 1 to embodiment 3 are superior to those of the comparative example 1 in 2 dimensions, such as a smoke amount and an aroma reducibility, and are slightly weaker than those of the comparative example in a sweetness dimension, and are substantially equivalent to those of the comparative example 1 in other dimensions.

For a taste test performed by using the atomization medium b (tobacco flavor), the atomization power is 6.5W. In the comparative example 2, an atomization core of a porous ceramic substrate is used. As shown in FIG. 4, the results of embodiment 1 to embodiment 3 are superior to those of the comparative example 2 in 2 dimensions, such as a sweetness and an aroma reducibility, and are substantially equivalent to those of the comparative example 2 in other dimensions.

The inventor considers through analysis that the chemical composition of the porous glass-ceramic substrate in the embodiments of this application mainly includes main composition such as Si and O. The main composition has a stable chemical property, and is not easy to be dissolved in an atomization medium or react with the atomization medium to generate an odor substance. Another trace composition such as, for example, Ca, Na, and Mg does not or cannot be easily dissolved in the atomization medium or react with the atomization medium to generate an odor substance. Therefore, each of the atomization medium formulas exhibits good aroma reducibility and exhibits good taste.

Obviously, the above embodiments are merely examples for clear description and not limitations on the implementations. For a person of ordinary skill in the art, other changes or alterations in different forms may also be made based on the foregoing description. All implementations are not required and cannot be exhaustive herein. However, the obvious changes or variations derived therefrom still fall within the protection scope of this application.

## Claims

1. An atomization core, comprising a porous substrate and a heating element, wherein
the porous substrate is a porous glass-ceramic substrate, and composition thereof by atomic percentage comprises: 60-65 at% of O and 20-35 at% of Si.

2. The atomization core of claim 1, wherein the composition of the porous glass-ceramic substrate by atomic percentage further comprises at least one of 3-7.5 at% of Na, 0.09-2 at% of Mg, 0.23-3 at% of Al, or 1-3.5 at% of Ca.

3. The atomization core of claim 1 or 2, wherein a porosity of the porous glass-ceramic substrate ranges from 50% to 90%;
preferably, the porosity of the porous glass-ceramic substrate ranges from 60% to 80%; and
particularly preferably, the porosity of the porous glass-ceramic substrate ranges from 62% to 77%.

4. The atomization core of any one of claims 1 to 3, wherein the porous glass-ceramic substrate comprises a crystalline phase and an amorphous phase, and has a crystallinity ranging from 50% to 99%.

5. The atomization core of claim 4, wherein the crystalline phase comprises a quartz phase.

6. The atomization core of any one of claims 1 to 5, wherein an average pore size of the porous glass-ceramic substrate ranges from 15 µm to 45 µm;
preferably, the average pore size of the porous glass-ceramic substrate ranges from 20 µm to 35 µm; and
particularly preferably, the average pore size of the porous glass-ceramic substrate ranges from 20 µm to 22 µm.

7. The atomization core of any one of claims 1 to 6, wherein a compressive strength of the porous glass-ceramic substrate is greater than 1.5 MPa.

8. The atomization core of any one of claims 1 to 7, wherein the compressive strength of the porous glass-ceramic substrate ranges from 6 MPa to 18 MPa.

9. The atomization core of any one of claims 1 to 8, wherein the heating element is a metal heating film; and
optionally, the metal heating film is selected from at least one of stainless steel or a nickelcontaining alloy.

10. An atomizer (1), comprising the atomization core of any one of claims 1 to 9.

11. An electronic atomization device, comprising the atomizer (1) of claim 10.
